# EUROPEAN PATENT APPLICATION

(11) **EP 2 270 740 A2**
(43) Date of publication of application: **05.01.2011**
(21) Application number: 09168971.1
(22) Date of filing: 28.08.2009
(51) Int. Cl.: G06Q 30/00

(54) **Method and system for providing content**

(30) Priority: 03.07.2009 KR 20090060872
(71) Applicant: Ein's I&S Co., Ltd., Gangnam-gu, Seoul 135-924 (KR)
(72) Inventor: Lee, Eun Young, Yangcheon-gu Seoul 158-732 (KR)
(74) Representative: Beck & Rössig European Patent Attorneys

(57) **Abstract**

A method for providing content, including: dividing brand content collected from a plurality of creators into objects; associating the divided objects with corresponding codes; storing the divided objects in a database, wherein the divided objects are associated with a creator of the respective brand content; receiving a brand selection from a user; outputting an electronic book including a page on which the user can view a brand store where goods related to the selected brand are displayed and a page on which the user can view content related to the selected brand classified according to the creator of the content; receiving an output selection from the user; combining the divided objects; and outputting, according to the output selection, the brand store, operator content, or advertiser content. In an embodiment, a content providing system, as described herein, is used to provide content.

## Description

### CROSS-REFERENCE TO RELATED APPLICATION

This application claims the benefit under 35 U.S.C. §119(a) of Korean Patent Application No. 10-2009-0060872, filed on July 3, 2009, which is hereby incorporated by reference in its entirety.

### BACKGROUND

### 1. FIELD

The present invention relates to a system and method for providing content.

### 2. DESCRIPTION OF THE RELATED ART

With development of the Internet and the proliferation of mobile communication networks, a multimedia age involving Internet web browsers, Internet protocol television (IPTV), mobile communication, digital multimedia broadcasting (DMB), among other network technologies is approaching.

Users access network content via various media devices. For example, users can access the Internet using a desktop personal computer (PC) or a notebook computer using wired or wireless communication technology, a wireless multimedia service (DMB or mobile multimedia service) using a personal digital assistant (PDA) or a mobile phone, and view Internet broadcasts (IPTV) using a television set (TV).

Although a variety of media devices are available, users may only be able to conveniently access limited content through each media device. A user may only be able to access particular content through a particular media device. Or a user may not be able to conveniently access desired content through their preferred media device.

### BRIEF SUMMARY

The present invention is directed to a method and system for providing content, by which brand content can be easily searched and various brand content classified according to a creator of such content.

The present invention is also directed to a method and system for providing content through an electronic book including a page on which a user can view a brand store and a page on which the user can view brand content classified according to a creator of such content.

According to an aspect of an embodiment of the present invention, there is provided a method for providing content, the method including: dividing brand content collected from a plurality of content creators into objects; associating the divided objects with corresponding codes; storing the divided objects in a database, wherein the divided objects are associated with a creator of the respective brand content; receiving a brand selection from a user; outputting an electronic book including a page on which the user can view a brand store where goods related to the selected brand are displayed and a page on which the user can view content related to the selected brand classified according to the creator of the content; receiving an output selection from the user; combining the divided objects; and outputting, according to the output selection, the brand store, operator content, or advertiser content. In an embodiment, the method provides brand content via a content providing system. In an embodiment, the plurality of content creators includes an advertiser of goods and an operator of a content providing system.

According to another aspect of an embodiment of the present invention, there is provided a content providing system, the system including: a receiver for receiving an access signal from a media device; a creation module for dividing brand content collected from a plurality of content creators into objects and associating the divided objects with corresponding codes; a database for storing the divided objects, wherein the divided objects are associated with a creator of the respective brand content; an input module for receiving a brand selection from the user; an output module for outputting a first screen for displaying an electronic book including a page on which the user can view a brand store where goods related to the selected brand are displayed and a page on which the user can view content related to the selected brand classified according to the creator of the content, a second screen for outputting a brand store where goods related to the selected brand are displayed by combining the divided objects when a store viewing page in the electronic book is selected by the user, a third screen for outputting operator content related to the selected brand when an operator content viewing page in the electronic book is selected by the user, and a fourth screen for outputting advertiser content related to the selected brand when an advertiser content viewing page in the electronic book is selected by the user; and a controller for permitting access to the system via the media device, associating the divided objects with corresponding codes, controlling combination of the divided objects, and controlling the receiver, the database, and the output module. In an embodiment, the plurality of content creators includes an advertiser and an operator.

### BRIEF DESCRIPTION OF THE DRAWINGS

The above and other features and advantages of the present invention will become more apparent to those of ordinary skill in the art by describing in detail example embodiments thereof with reference to the attached drawings in which:
FIG. 1 is a block diagram illustrating a method for providing content according to an embodiment of the present invention;
FIG. 2 is a block diagram of a content providing system according to an embodiment of the present invention;
FIG. 3 illustrates a method of creating content using a creation module, such as the creation module shown in FIG. 2, in accordance with an embodiment of the present invention;
FIG. 4 illustrates a method for creating brand content for respective media devices by combining divided objects in accordance with an embodiment of the present invention;
FIG. 5 is a flowchart illustrating a method for providing content in accordance with an embodiment of the present invention;
FIG. 6 illustrates an example of a screen with an input field for brand searching in accordance with an embodiment of the present invention;
FIG. 7 illustrates an example of an electronic book related to a specific brand in accordance with an embodiment of the present invention;
FIG. 8 illustrates an example of a screen for showing a specific brand store in accordance with an embodiment of the present invention;
FIG. 9 illustrates an example of a screen for showing detailed information about specific goods in accordance with an embodiment of the present invention;
FIGS. 10A, 10B, and 10C illustrate a method for presenting brand content related to specific goods in accordance with an embodiment of the present invention;
FIG. 11 illustrates an example of an electronic book for presenting brand content created by a specific creator in accordance with an embodiment of the present invention;
FIG. 12 illustrates an example of a screen for creating user content using a template in accordance with an embodiment of the present invention;
FIG. 13 illustrates a method of transmitting link information so that specific content can be viewed from an external user space in accordance with an embodiment of the present invention; and
FIG. 14 illustrates a method of registering content associated with multiple brands as corresponding brand content in accordance with an embodiment of the present invention.

### DETAILED DESCRIPTION

The present invention is directed to a method and system for providing content, by which brand content can be easily searched and various brand content classified according to a creator of such content. The present invention is also directed to a method and system for providing content through an electronic book including a page on which a user can view a brand store and a page on which the user can view brand content classified according to a creator of such content.

The subject matter of the present invention is described with specificity to meet statutory requirements. But this description is not intended to limit the scope of this patent. Rather, the inventors have contemplated that the claimed subject matter might also be embodied in other ways, to include different steps or combinations of steps similar to those described in this document, in conjunction with other present or future technologies.

Aspects of the invention can be described in the general context of computer-executable instructions, such as program modules, being executed by a computer. Generally, program modules include routines, programs, objects, components, data structures, etc., that perform particular tasks or implement particular abstract data types. Moreover, those skilled in the art will appreciate that the invention can be practiced with a variety of computer-system configurations, including multiprocessor systems, microprocessor-based or programmable-consumer electronics, minicomputers, mainframe computers, and the like. Any number of computer-systems and computer networks are acceptable for use with the present invention.

Specific hardware devices, programming languages, components, processes, protocols, formats, and numerous other details including operating environments and the like are set forth to provide a thorough understanding of the present invention. In other instances, structures, devices, and processes are shown in block-diagram form, rather than in detail, to avoid obscuring the present invention. But an ordinary-skilled artisan would understand that the present invention can be practiced without these specific details. Computer systems, servers, work stations, and other machines can be connected to one another across a communication medium including, for example, a network or networks.

As one skilled in the art will appreciate, embodiments of the present invention can be embodied as, among other things: a method, system, or computer-program product. Accordingly, the embodiments can take the form of a hardware embodiment, a software embodiment, or an embodiment combining software and hardware. In one embodiment, the present invention takes the form of a computer-program product that includes computer-useable instructions embodied on one or more computer-readable media.

Computer-readable media include both volatile and nonvolatile media, removable and nonremovable media, and contemplate media readable by a database, a switch, and various other network devices. By way of example, and not limitation, computer-readable media comprise media implemented in any method or technology for storing information. Examples of stored information include computer-useable instructions, data structures, program modules, and other data representations. Media examples include, but are not limited to, information-delivery media, RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These technologies can store data momentarily, temporarily, or permanently.

The invention can be practiced in distributed-computing environments where tasks are performed by remote-processing devices that are linked through a communications network. In a distributed-computing environment, program modules can be located in both local and remote computer-storage media including memory storage devices. The computer-useable instructions form an interface to allow a computer to react according to a source of input. The instructions cooperate with other code segments or modules to initiate a variety of tasks in response to data received in conjunction with the source of the received data.

The present invention can be practiced in a network environment such as a communications network. Such networks are widely used to connect various types of network elements, such as routers, servers, gateways, and so forth. Further, the invention can be practiced in a multi-network environment having various, connected public and/or private networks.

Communication between network elements can be wireless or wireline (wired). As will be appreciated by those skilled in the art, communication networks can take several different forms and can use several different communication protocols. And the present invention is not limited by the forms and communication protocols described herein.

The invention is described more fully hereinafter with reference to the accompanying drawings, in which embodiments of the invention are shown. This invention can, however, be embodied in many different forms and should not be construed as limited to the embodiments set forth herein. Rather, these embodiments are provided to fully enable those of ordinary skill in the art to embody and practice the invention.

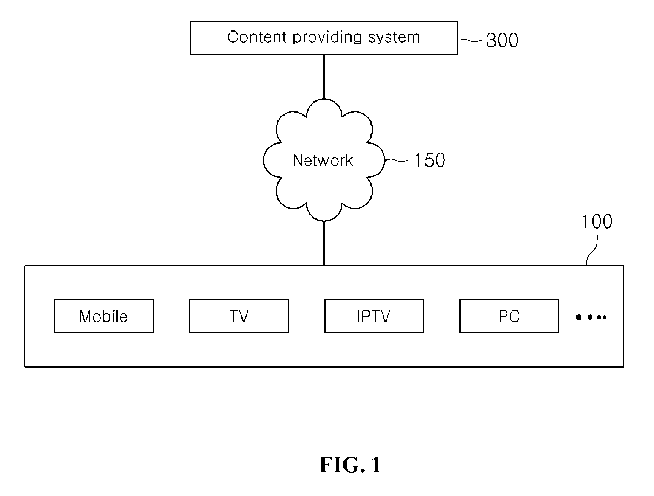

FIG. 1 is a block diagram illustrating a method for providing content according to an embodiment of the present invention.

As shown in FIG. 1, a media device 100 can be connected over a network 150 to a content providing system 300. The network 150 refers to a network performing communication via a communication medium, such as the Internet, a wireless communication network, a broadcasting network, etc.

The media device 100 can be a variety of terminals connected to the content providing system 300. For example, the media device 100 can include a mobile terminal, a television set (TV), an Internet protocol television (IPTV), a desktop PC, and the like. The media device 100 can include a user terminal that receives content and an advertiser terminal that provides content, which are divided into users.

In the embodiment shown, the content providing system 300 can be accessed via a plurality of media devices 100, including but not limited to a TV, an IPTV, mobile communication, an Internet web browser, digital multimedia broadcasting (DMB), among other media devices. In a further embodiment, the content providing system 300 can provide content via a plurality of media devices. Providing content can include displaying and/or transmitting the content.

A TV is a media device for receiving a broadcast signal from a broadcasting station, demodulating the received broadcast signal, and displaying video and sound information. TV can include an analog TV using an analog signal and/or a digital TV using a digital signal.

IPTV includes a service that provides broadcasting channels, video on demand (VOD), bidirectional data service, and the like, through a user terminal via a high-speed network, such as the Internet. In an embodiment, IPTV can be provided using: a component for collecting and processing content from a content provider (CP), a program provider (PP), and the like; a component for determining a format for compressing the content for smooth transmission over the high-speed network; and a component for identifying rights of copyright holders and preventing illegal distribution of the content. In an embodiment, the IPTV is not a simple Internet TV but a media device for transmitting private content. In a further embodiment, the IPTV can be controlled via a simple remote control device.

Mobile communication includes second-generation mobile communication such as Global System for Mobile Telecommunication (GSM), Code Division Multiple Access (CDMA), and the like; third-generation mobile communication such as Wideband Code Division Multiple Access (WCDMA), CDMA2000, High-Speed Downlink Packet Access (HSDPA), and High Speed Uplink Packet Access (HSUPA), and the like; and next-generation mobile communication such as Wibro, Long Term Evolution (LTE), and the like. Mobile communication also includes a medium for transmitting private content for display on a media device, such as on a relatively small screen of a mobile phone or PDA.

Internet web browser refers to a medium for transmitting documents created using a markup language or other technology, such as Hyper Text Markup Language (HTML), Extensible Markup Language (XML), and/or Standard Generalized Markup Language (SGML), using transfer protocol such as Hyper Text Transfer Protocol (HTTP) or Transmission Control Protocol/Internet Protocol (TCP/IP).

Digital Multimedia Broadcasting (DMB), including terrestrial DMB and satellite DMB, refers to a medium for transmitting private content designed for a relatively small screen of a portable DMB terminal.

Throughout this disclosure, content corresponding to a particular media device refers to content optimized for convenient transmission and display on the particular media device. For example, content corresponding to an Internet web browser can be created using a markup language such as HMTL, XML, etc., a scripting language such as java script, and/or an add-in program such as Active X, OCX, etc., and transmitted via TCP/IP. Content corresponding to Mobile Communication can include simple versions of Internet web content for mobile communication terminals, and can be transmitted via wireless communication technology such as Wireless Application Protocol (WAP). Content corresponding to IPTV can include multimedia files encoded using MPEG-2, MPEG-4, WMV-9, H.264, etc. Content corresponding to DMB can include multimedia files encoded using MPEG-2 or MPEG-4, which have a relatively smaller capacity than for IPTV, or other file formats.

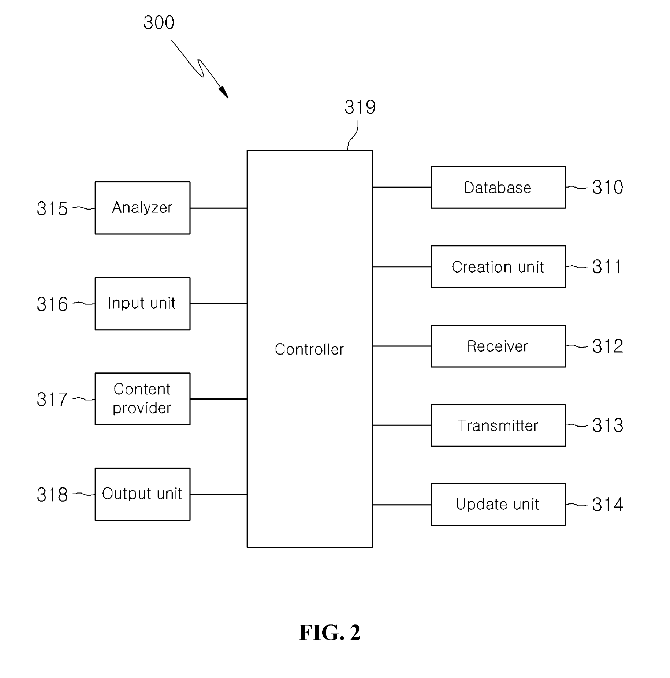

FIG. 2 is a block diagram of a content providing system 300 according to an embodiment of the present invention. The content providing system 300 can include a database 310, a creation module 311, a receiver 312, a transmitter 313, an update module 314, an analyzer 315, an input module 316, a content provider 317, an output module 318, and a controller 319. In other embodiments, some of components of the content providing system 300 can be omitted or others can be added.

In an embodiment of the present invention, the database 310 includes one or more computer-readable media for storing various information. For example, specific brand content can be stored in the database 310. The brand content can include content related to specific brands, including content related to brand names, content related to goods, and the like. For example, the specific brand content can include articles about specific brands, moving pictures, images, detailed product information, articles about products, images of products, moving pictures of products, among other information.

For the purpose of this disclosure, an image depicting only a single product (e.g., a specific bag or specific shoes) will be referred to as a specific goods image, while a broader category of content, including articles about a specific brand, moving pictures, images, detailed product information, articles about products, moving pictures of products, among other brand or product information, will be referred to as brand content.

In an embodiment of the subject invention, brand content can be classified according to specific criteria and stored in the database 310. For example, the brand content can be classified according to provided media. The brand content can also be classified by the corresponding media device for presenting the brand content, for example TV content, mobile content, IPTV content, Internet web content, etc. In an embodiment, content is classified based on the corresponding media device to handle different play-back requirements of different media devices.

In an embodiment, the brand content is classified according to a creator of the content and stored in the database 310. Content creators can include a brand advertiser, an operator of the content providing system, users provided with brand content, among other possible content creators. A brand advertiser refers to a seller who sells specific brand goods. An operator refers to a person who operates the content providing system 300. A user refers to a person provided with the brand content through the content providing system 300. Accordingly, the content providing system 300 can receive content via various routes and provide the content to users.

In an embodiment of the present invention, brand content is stored in the database 310 in terms of brand content or goods. The brand content can be divided into objects, and the divided objects and specific codes associated with the divided objects can be stored in the database 310.

In addition to brand content, information for a user behavior pattern or reaction information to the brand content can also be stored in the database 310. The information for a user behavior pattern can include content usage information, content creation information, content advertisement information, product purchase history related to specific content, brand search history, among other behavior pattern information. Reaction information to brand content can include the number of searches for such content, the number of downloads of such content, the number of links to such content, the number of comments on such content, the number of edits related to such content, among other information related to brand content.

In an embodiment of the subject invention, the creation module 311 creates content using a specific source. The specific source can include divided objects. For example, when an article about a specific brand is formed of an image and text, both the image and the text can be divided objects. The image can also be divided into a first image area and a second image area, and the first image area and the second image area can also be divided objects.

In a further embodiment, using content created corresponding to a first media device, the creation module 311 can create content corresponding to a second media device. For example, the creation module 311 can create content suitable for a mobile environment using content created for a PC. A method for creating content will be described below.

In an embodiment, the creation module 311 provides a template that enable the user to edit brand content in terms of objects. In a particular embodiment, the creation module 311 provides a plurality of templates, which can be selected by the user. Editing brand content using the templates will be described below in greater detail.

In an embodiment of the subject invention, the receiver 312 can receive various signals and/or content. For example, the receiver 312 can receive an access signal from a media device or brand content from an advertiser or user. In an embodiment, a received access signal is delivered to and analyzed by the controller 319. The controller 319 can analyze the access signal to determine the type of the media device, location information for the media device, or user information for the media device. In a further embodiment, the controller 319 determines whether to permit the media device to access the system 300 based on the analyzed information. When access is permitted, the content providing system 300 can perform data communication with media device.

In an embodiment, the receiver 312 includes a reception path (not shown) corresponding to a media device. For example, a mobile access signal can be received along a first reception path, an Internet-web access signal along a second reception path, and a TV access signal along a third reception path. Thus, the receiver 312 can receive data from the media device along a reception path corresponding to the media device or type of media device.

In an embodiment of the subject invention, the transmitter 313 transmits brand content stored in the database 310 or link information for viewing the brand content stored in the database 310 to an external space. The external space refers to a space other than the content providing system 300. For example, the external space can include a user terminal, an advertiser terminal, a specific web site (or a specific web server), or an external user space. The term "external user space" refers to a user-associated space provided by a system external to the content providing system 300. For example, the external space can include a homepage, a blog, E-mail, etc.

In an embodiment, the transmitter 313 transmits specific data (e.g., brand content or link information) in consideration of the media device connected to the content providing system 300 under control of the controller 319. For example, the transmitter 313 can transmit mobile content to the mobile terminal and TV content to the TV.

In an embodiment, the transmitter 313 includes a transmission path (not shown) corresponding to a connected media device. For example, mobile data can be transmitted along a first transmission path, Internet web data along a second transmission path, and TV data along a third transmission path.

In an embodiment of the subject invention, when new brand content is registered in a specific area of the content providing system 300, the update module 314 updates the registered new brand content in other areas associated with the specific area. Accordingly, when the new content is registered in a first area, the update module 314 updates the new content in a second area associated with the first area. The first area and the second area can be spaces in the content providing system 300. For example, each of the first and second areas can be one of a store page in an electronic book, which will be described later, and a content viewing page on which the user can view brand content. In an embodiment, when brand content stored in the content providing system 300 is updated, the controller 319 can notify the user of the update. In an embodiment of the subject invention, the analyzer 315 analyzes behavior history of the user to produce a user behavior pattern. For example, the analyzer 315 can analyze information fed back from a media device, such as information received from an Internet URL, an IPTV operating system, or a mobile communication system. In another embodiment, the analyzer 315 can take note of the number of times specific brand content was used. In an embodiment of the subject invention, the analyzer 315 can analyze reaction to the content and produce content reaction information. For example, content reaction information can include the number of searches for particular brand content, the number of downloads of such content, the number of links to such content, the number of comments on such content, the number of edits related to such content, among other information related to such content.

In an embodiment of the subject invention, the input module 316 receives user input for a brand or content search (e.g., a specific brand content search). For example, the input module 316 can receive a search keyword from the user to search for a specific brand name or specific content.

In an embodiment of the subject invention, the content provider 317 provides brand content to the user classified according to creators of the content. The content creators can include a brand advertiser, an operator of the content providing system 300, a user receiving brand content, and the like. In an embodiment, an advertiser can create brand content for his or her goods advertisement. In an embodiment, an operator can create brand content to publicize brand content of a specific advertiser to the user. In an embodiment, a user can create new brand content by editing or reprocessing the provided brand content.

In an embodiment, the content provider 317 can provide virtual brand stores related to a specific brand and presenting specific brand goods to the user. The term "brand store" refers to a specific location in cyber-space, where specific brand goods can be represented by two-dimensional (2D) or (three-dimensional) 3D images.

According to an embodiment of the present invention, a brand store and brand content can be output on a specific page in an electronic book related to a specific brand. For the purpose of this disclosure, the term "electronic book" refers to a virtual book through which a user can view specific information or content. The user can access a specific brand store by entering the electronic book. The electronic book can further include a page on which a user can view brand content classified according to creators. Accordingly, the user can select a specific brand and view a brand store and brand content through an electronic book related to the selected brand.

In an embodiment, the brand content provided through an electronic book can be downloaded or linked to the external space by user selection. In a further embodiment, the selected content can be downloaded or linked in its entirety or the content can be divided into objects and specific divided objects can be downloaded or linked to the external space.

In an embodiment of the subject invention, the output module 318 outputs a screen including various information. For example, the output module 318 displays a screen showing a search result matching the input search keyword, a store screen for a brand content search, a specific-brand content playing screen, and the like.

In an embodiment of the subject invention, the controller 319 organically controls functions performed by the database 310, the creation module 311, the receiver 312, the transmitter 313, the update module 314, the analyzer 315, the input module 316, the content provider 317, or the output module 318.

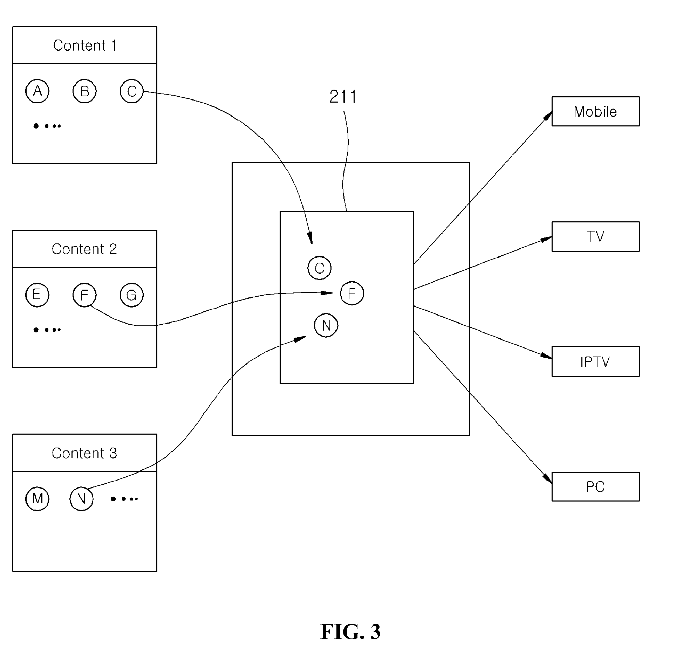

FIG. 3 illustrates a method of creating content using a creation module, such as the creation module 311 shown in FIG. 2, in accordance with an embodiment of the present invention. Referring to FIG. 3, each content or brand good consists of at least one object. Content 1 includes objects A, B, and C, content 2 includes objects E, F, and G, and content 3 includes objects M and N.

In an embodiment, the creation module 311 includes an editor module (not shown) capable of creating content. In an embodiment, the editor module can extract a specific object from content. For example, the editor can extract object C from content 1, object F from content 2, and object N from content 3. The editor can then create new content 211 by combining the extracted content C, F, and N.

In an embodiment of the subject invention, an object attribute of each object can be associated with a specific code. For example, object A can be associated with code A and object B can be associated with code B. In an embodiment, the object attribute is a feature that distinguishes a specific object from other objects. In an embodiment, instead of all features of objects being associated with specific codes, only attributes of the objects are associated with the specific codes, thereby minimizing load on the content providing system 300. Thus, brand content or brand goods can be divided into objects, and the divided objects and specific codes associated with the divided objects can be stored in the database 310.

For example, it is assumed that brand content 1 consists of object A, object B, and object C, and brand content 2 consists of object A, object B, and object D. If the brand content are stored in the database 310 in terms of content, brand content 1 (object A + object B + object C) and brand content 2 (object A + object B + object D) can be stored in the database 310, in which object A and object B are stored in an overlapping manner. However, when brand content are divided into the objects, the divided objects and specific codes associated with the divided objects are stored in the database 310, object A, object B, object C, and object D, and code information associated with the objects only need to be stored in the database 310. Accordingly, creating and storing content using the object-based classifying method can reduce the amount of information or data stored in the database 311. In a further embodiment, classifying the brand content according to objects can reduce the loading time upon providing the brand content.

In an embodiment, the controller 319 can compile tracking information for each object by tracking each code. Tracking information of an object refers to information related to a trace of the object. The tracking information can include an extraction order or number of an object, information on a movement path of an extracted object, conversion information for the extracted object, and the like. In an embodiment, the content providing system 300 can track each code by numbering each code to correspond to the extraction order of each code. For example, first extracted object A can be associated with code "A_0001" and second extracted object A can be associated with code "A_0002." Accordingly, a number (e.g. 0001, 0002) subsequent to code associated with an object attribute (e.g., "A" for object A) is used to store an extraction number of each object. When the extracted object is downloaded or linked to the external user space, the controller 319 can store code "A_0001" or "A_0002" in the database 310.

In an embodiment, created content can be transmitted to or displayed on various media devices. For example, when the content 211 is created corresponding to the first media device, a plurality of content corresponding to a plurality of media devices can be created using a method for creating content corresponding to the other media device using the created content 211. In an embodiment, a simple format conversion for converting a format of the first content into a format of the second content can be employed. In a further embodiment, editing and conversion for re-encoding and/or rearranging multimedia elements of the first content according to actual conditions of the second content are also employed.

For example, if the first media device is an Internet web browser and the second media device is a mobile communication device, a simple standard conversion is performed to convert the first content conforming to an HMTL or XML format into the second content conforming to a WAP format. As an example of editing and conversion, the first content allowing for relatively complex manipulation with a keyboard and a mouse and consisting of a high-quality image and moving picture can be converted into the second content allowing manipulation with a limited number of numeric keys and consisting of a relatively low quality image and moving picture.

In a further example, if the first media device is an Internet web browser and the second media device is an IPTV, each module page of a web page is captured as a still image or converted into a file consisting of images and moving pictures except for add-in programs such as Active X and Flash. If the second media device is a DMB, qualities of images and moving pictures are reduced for a relatively smaller bandwidth.

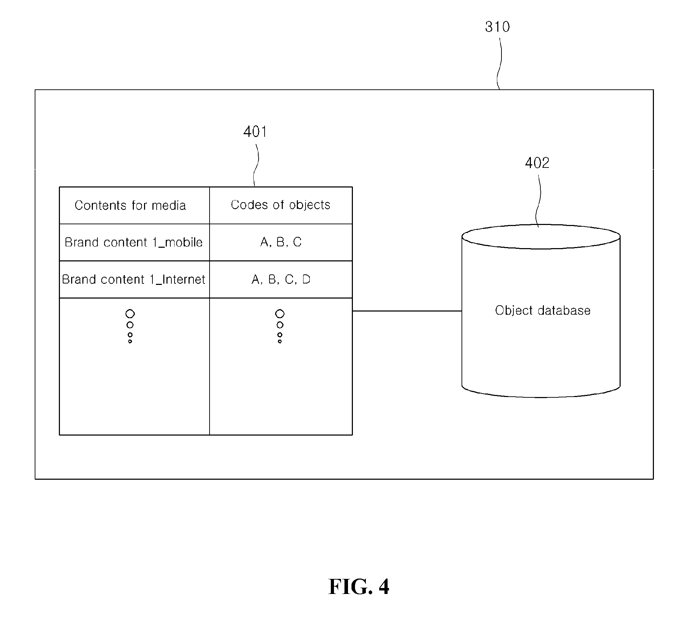

In an embodiment of the present invention, the method for providing content suitable for respective media devices includes combining divided objects when content is divided into objects. FIG. 4 illustrates a method for creating brand content for respective media devices by combining divided objects in accordance with an embodiment of the present invention.

As shown in FIG. 4, when brand content are divided into objects, the divided objects can be combined according to the formats of the media devices and provided to the user. The database 310 can include a mapping table 401 for the objects of brand content, and an object database 402 in which the divided objects are stored. For example, the controller 319 can invoke object constituent codes A, B, and C to provide mobile brand content 1. Here, the object constituent code refers to a specific code associated with the divided object. When the object constituent codes A, B, and C are invoked, the controller 319 can extract objects associated with the invoked codes from the object database 402, combine the objects, and provide a result of the combination to the user. Also, the controller 319 can invoke object constituent codes A, B, C, and D to provide Internet brand content 1. When the object constituent codes A, B, C, and D are invoked, the controller 319 can extract objects associated with the invoked codes from the object database 402, combine the objects, and provide a result of the combination to the user. The different constituent objects of mobile brand content 1 and Internet brand content 1 are caused by the different media formats. For example, since there is a difference in decoding or playing capability among media devices, object constituent codes for the brand content can vary. The plurality of created content can then be provided via a media device.

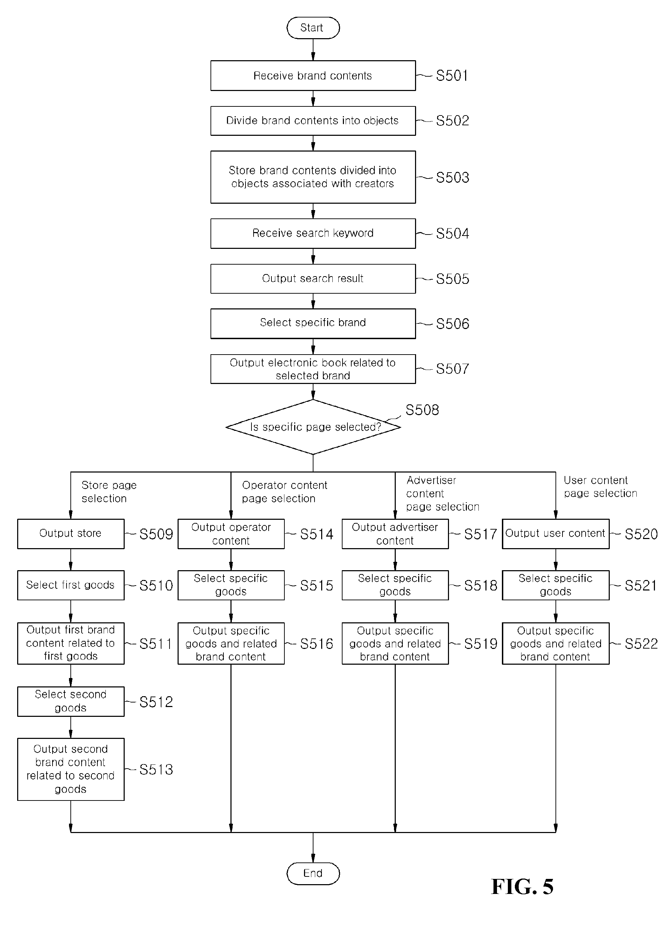

FIG. 5 is a flowchart illustrating a method for providing content in accordance with an embodiment of the present invention. As shown in the embodiment of FIG. 5, the receiver 312 can receive brand content from a plurality of creators (S501). As discussed above, the plurality of creators can include an operator, an advertiser, and a user. The received brand content can be divided into objects using the method discussed in relation to FIG. 3 and stored in the database 310 with the brand content associated with respective creators (S502, S503). In an embodiment, the controller 319 can create second brand content for a second media device using first brand content created for the first media device. Methods for converting brand content for different media formats are described above.

In an embodiment of the subject invention, the user can attempt to access a content providing system 300 using a specific media device (e.g., a user terminal). Then, when the receiver 312 receives a user access signal, the controller 319 can determine whether to permit the access. For example, the controller 319 can analyze the type of the specific media device, location information for the specific media device, or user information for the specific media device by analyzing the access signal. The controller 319 can then determine whether to permit access of the specific media device based on the analyzed information. When the access to the specific media device is permitted, the controller 319 can output an initial screen through the output module 318. The user can select a specific brand on the initial screen or select a specific menu on the initial screen.

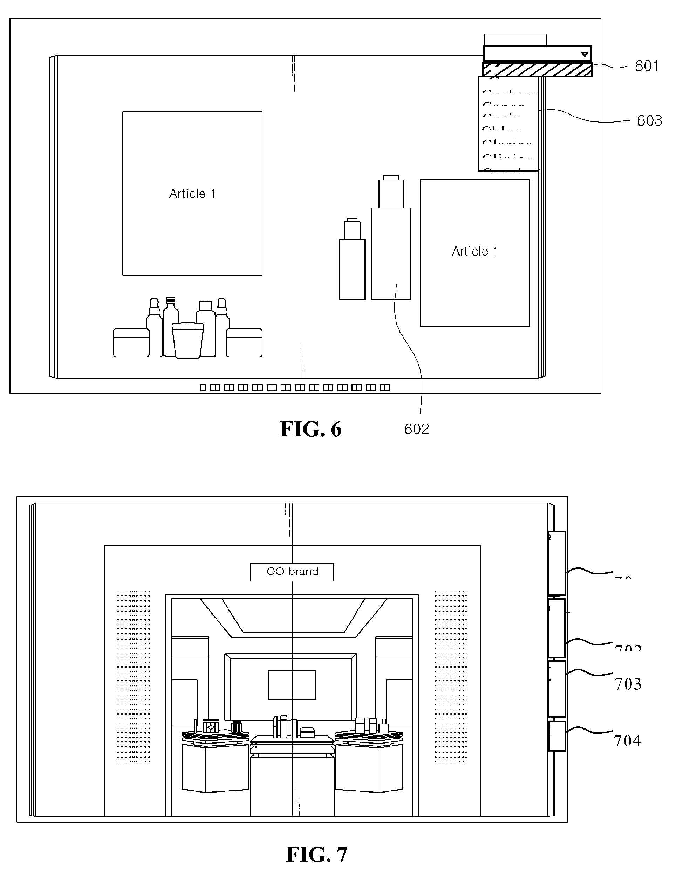

For example, the controller 319 can output a screen with an input field for brand searching. FIG. 6 illustrates an example of a screen with an input field for brand searching in accordance with an embodiment of the present invention.

As shown in the embodiment of FIG. 6, the output module 318 can display a screen including an input field for brand searching 601 and a specific goods image 602. When the user selects the specific goods image 602, the output module 318 can output an enlarged image (not shown) of the product depicted in the specific goods image. Also, the user can input a specific keyword for brand search into the input field 601. When a search keyword is input (S504), the output module 318 can display a brand search result window 603 including a brand matching the search keyword (S505). For example, a brand including the input keyword or a brand of an advertiser purchasing a specific keyword can be displayed on the brand search result window 603.

In an embodiment, when the input module 316 receives the input search keyword from the user (S504), the controller 319 can output a search result screen matching the input search keyword, via the output module 318 (S505).

The user can select any one of brands displayed on the brand search result window 603 (S506). When a specific brand is selected by the user, the output module 318 can output an electronic book related to the selected specific brand (S507).

FIG. 7 illustrates an example of an electronic book related to a specific brand in accordance with an embodiment of the present invention.

As shown in the embodiment of FIG. 7, the electronic book includes a page 701 that enables a user to view a specific brand store, and pages 702, 703, and 704 that enable the user to view specific brand content classified according to creators (e.g., an operator, an advertiser, and a user).

In an embodiment, the controller 319 controls a default page to be displayed as an initial screen of the electronic book. The default page can be set by an operator of the content providing system 300 or the user. Also, the controller 319 can automatically set the default page by analyzing a behavior pattern of the user. For example, a page most frequently accessed by the user during a predetermined period can be set as the initial screen.

When the user selects the store viewing page 701, the output module 318 can output a screen showing a specific brand store (S508, S509).

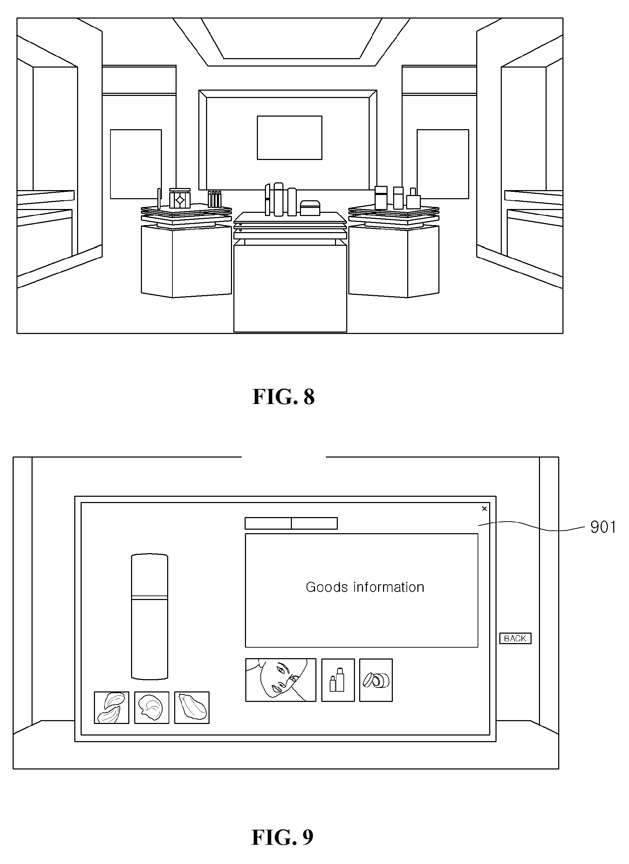

FIG. 8 illustrates an example of a screen for showing a specific brand store in accordance with an embodiment of the present invention.

As shown in the embodiment of FIG. 8, goods are displayed in the specific brand store. In response to terminal operation by a user, the output module 318 can change the view of the specific brand store displayed on the screen. Thus, the user can view various displayed goods in different areas of the of the specific brand store. When specific goods are selected from the displayed goods, the output module 318 can output detailed information for the selected goods.

FIG. 9 illustrates an example of a screen for showing detailed information about specific goods in accordance with an embodiment of the present invention.

As shown in the embodiment of FIG. 9, an enlarged image for selected goods, an article about the goods, link information (or a link item) to a space where a user can purchase the specific goods, or content associated with the goods can be included in a window 901, which shows detailed information for the specific goods. There can be a variety of content associated with goods. For example, the associated content can include content about other brands of the same type as that of the selected goods, the same brand content for goods similar to the selected goods, and the like.

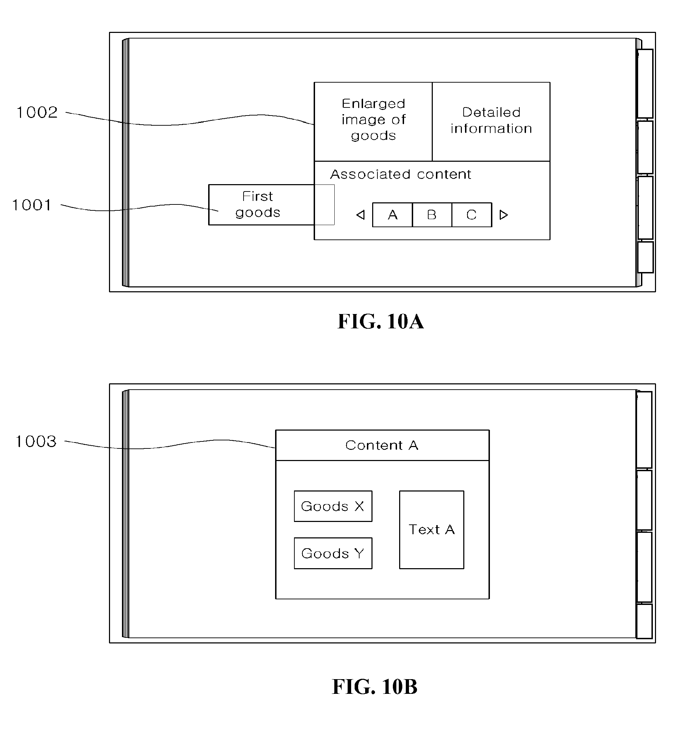

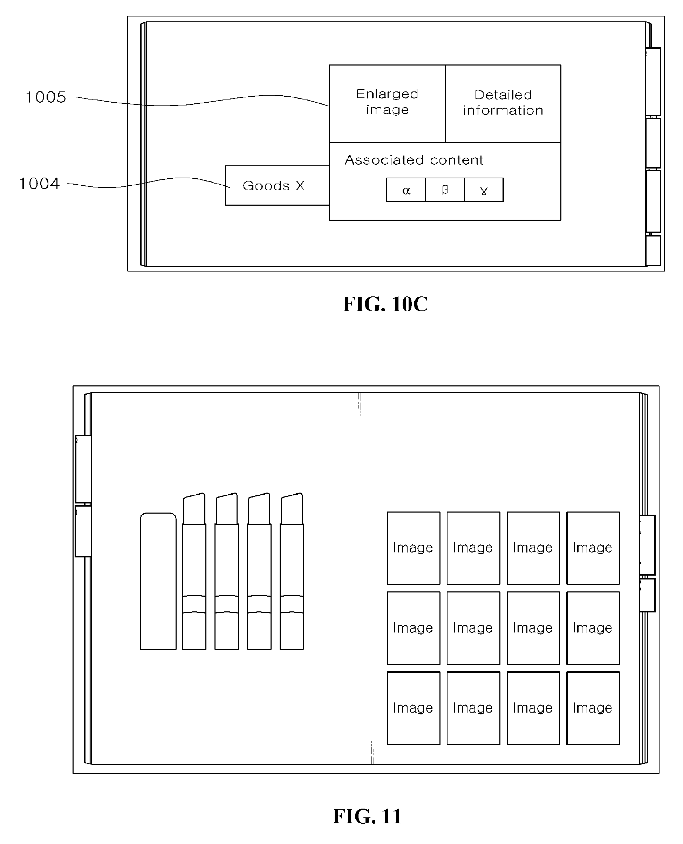

FIGS. 10A, 10B, and 10C illustrate a method for presenting information about specific goods in accordance with an embodiment of the present invention.

As shown in FIG. 10A, in an embodiment, a first goods image 1001 is displayed in the specific brand store. When the goods image 1001 is selected by the user (S510), the output module 318 can output a detailed information window 1002 for the selected goods. An enlarged image of the selected goods, an article about the goods, and the content associated with the goods can be included in the detailed information window 1002. There can be a variety of content associated with the goods. For example, the associated content can include content about other brands of the same type as that of the selected goods, the same brand content for goods similar to the selected goods, and the like.

FIG. 10B illustrates a screen on which specific brand content (e.g., content A) selected from associated content related to the first goods is output. That is, the controller 319 can control the selected specific brand content 1003 to be played and output via the output module 318 (S511). When specific goods (e.g., goods X) are selected from goods included in the output specific brand content 1003 (S512), the output module 318 can output the selected goods and a detailed information window for the selected goods as shown in FIG. 10C.

In FIG. 10C, selected goods (e.g., goods X) 1004 and a detailed information window 1005 for the selected goods are displayed in the specific brand store (S513). An enlarged image of the selected goods, an article about the goods, content associated with the goods, etc. can be included in the detailed information window 1005. Also, when specific brand content is selected from brand content displayed in a thumbnail form on the detailed information window 1005, the selected brand content can be displayed.

As described above, the method for providing content according to an embodiment of the present invention includes cross-referencing specific goods with brand content related to the specific goods, allowing the user to conveniently search for content and goods.

According to an exemplary embodiment of the present invention, the user can view brand content by selecting the brand content viewing page in the electronic book. The brand content viewing page can be classified according to creators. As discussed above, the creator can include an operator, an advertiser, and a user.

FIG. 11 illustrates an example of an electronic book for presenting brand content created by a specific creator in accordance with an embodiment of the present invention.

As shown in the embodiment of FIG. 11, the electronic book can provide specific brand content classified according to creators (e.g., an operator, advertiser, and user). In another embodiment, the brand content can be classified according to types of content (not shown). For example, the brand content can be classified into a pictorial, an article, and a moving picture. In a further embodiment, brand content provided through the electronic book can be rearranged according to specific criteria. For example, the brand content can be arranged according to a creating order or popularity order.

Referring back to FIG. 5, when the user selects the operator content viewing page, brand content created by operators can be output (S508, S514). The operator content can be aligned according to various criteria. For example, the brand content can be aligned according to registration date, popularity, content type (e.g., a moving picture, an article), etc.

In an embodiment, specific brand content can be cross-referenced to specific goods on the operator content viewing page. For example, when specific goods are selected from goods included in the operator content viewing page, the controller 319 controls the output module 318 to output the specific goods image and/or other brand content related to the specific goods (S515, S516).

When the user selects an advertiser content viewing page, brand content created by an advertiser can be output (S508, S517). The advertiser content can be aligned according to various criteria. For example, the advertiser content can be aligned according to registration date, popularity, content type (e.g., a moving picture or an article), etc.

Specific brand content can be cross-referenced to specific goods on the advertiser content viewing page. For example, when specific goods are selected from the goods included in the advertiser content viewing page, the controller 319 controls the output module 318 to output the specific goods image and/or other brand content related to the specific goods (S518, S519).

When the user selects a user content viewing page, brand content created by the user can be output (S508, S520). The user content can be aligned according to various criteria. For example, the user content can be aligned according to registration date, popularity, content types (e.g., a moving picture or an article), etc.

Specific brand content can be cross-referenced to specific goods on the user content viewing page. For example, when specific goods are selected from goods included in the user content viewing page, the controller 319 controls the output module 318 to output the specific goods image and/or other brand content related to the specific goods (S521, S522).

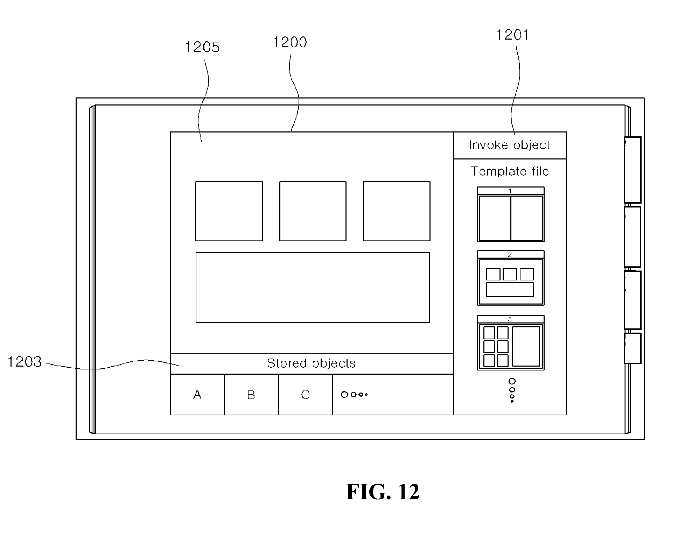

In a further embodiment of the subject invention, a method is provided by which a user can create content using a template. In an embodiment, the creation module 311 can provide the template to a user terminal for easy object-based editing. FIG. 12 illustrates an example of a screen for creating user content using a template in accordance with an embodiment of the present invention.

In the embodiment shown in FIG. 12, the template is provided to the user through a template providing window 1200. The user can select a desired template from templates provided on the right side of the window 1200. For example, when a user selects a template type 2, a format corresponding to the template type can be displayed on the content creation screen 1205. The user can then create brand content according to the format. For example, a specific object can be easily added to the template through a simple user input (e.g., a drag input, touch input, click, etc.). The specific object can be an object extracted from the database 310 or an object previously stored by the user. For example, the specific object can be selected using an object search command 1201 for finding objects stored in the database 310, or an object menu 1203 for selecting objects previously stored by the user. The selected object can be automatically created as content according to a specific format corresponding to the user-selected template.

In other embodiments, the content providing system 300 can receive a user input for object production, in addition to a user input for object selection, and create user content. For example, the user input for object production can include a user input for producing a specific article.

In an embodiment of the present invention, brand content selected by a user can be transmitted to an external user space. For example, the user can select a specific goods image from brand goods displayed in a brand store, or the user can select specific brand content from brand content provided through an electronic book, among other selection methods. The selected content can then be transmitted to the external user space. In an embodiment, the transmitter 313 transmits the specific goods image or the specific brand content selected by the user to the external user space. The selected content can be downloaded or linked in its entirety or the content can be divided into objects and specific divided objects can be downloaded or linked to the external space.

In an embodiment, the transmitter 313 transmits only link information to the external user space so that specific content (specific goods image or specific brand content) selected by the user can be viewed. By transmitting only link information to the external user space, retransmission and copying of the content can be prevented and copyrights related to the content can be respected.

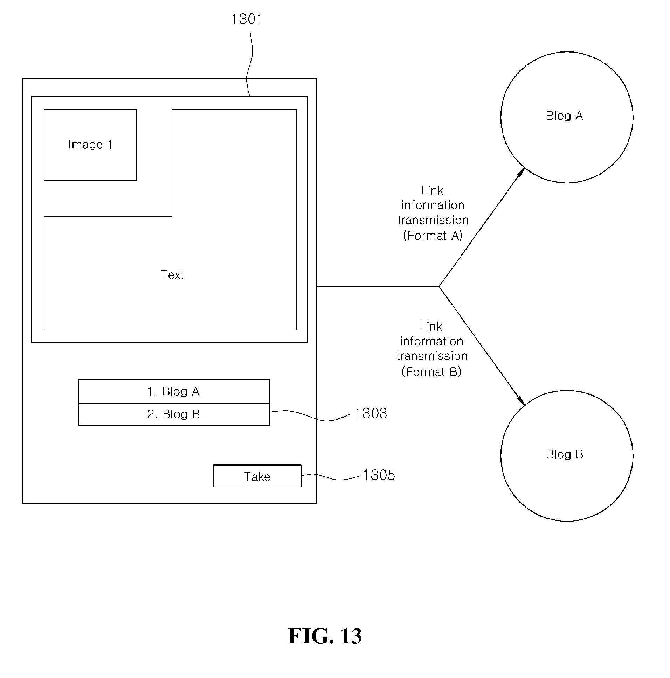

FIG. 13 illustrates a method of transmitting link information so that specific content can be viewed from an external user space in accordance with an embodiment of the present invention.

As shown in FIG. 13, a user can view selected brand content 1301 through an electronic book or other display. In an embodiment, the transmitter 313 transmits link information to an external user so that the selected brand content 1301 can be viewed, instead of transmitting the brand content 1301. The link information can include information for viewing the entire selected brand content 1301 or some objects of brand content 1301 (e.g., an image, a text, and the like). The user can select an external user space to transmit the link information via the external user space input window 1303. For example, when the user selects "blog A" or "blog B" as external user spaces, the link information can be transmitted to "blog A" or "blog B". When the user selects the link information transfer button 1305, the link information can be transmitted to the selected external user space.

In an embodiment, the content providing system 300 transmits the link information in consideration of a format supported by the external user space. For example, when blog A supports format A (e.g., a URL format) and blog B supports format B (a JavaScript format), the content providing system 300 can transmit link information in format A to blog A and link information in format B to blog B.

In an embodiment, when a specific page with the link information is output, the external user space can enable a brand content associated with the link information to be automatically displayed without user input or independent of any user input.

In an embodiment of the present invention, the controller 319 can extract tracking information from the transmitted link information and store the tracking information in the database 310. The tracking information can include location information for the external user space and transmission number information for the link information (i.e., the number of times the specific link information has been transmitted). The location information for the external user space can include a specific page address of the external user space and a location of a specific area of the specific page.

According to an embodiment of the present invention, content associated with a plurality of brands are registered in the content providing system 300, which can transmit the brand content to a plurality of brand stores.

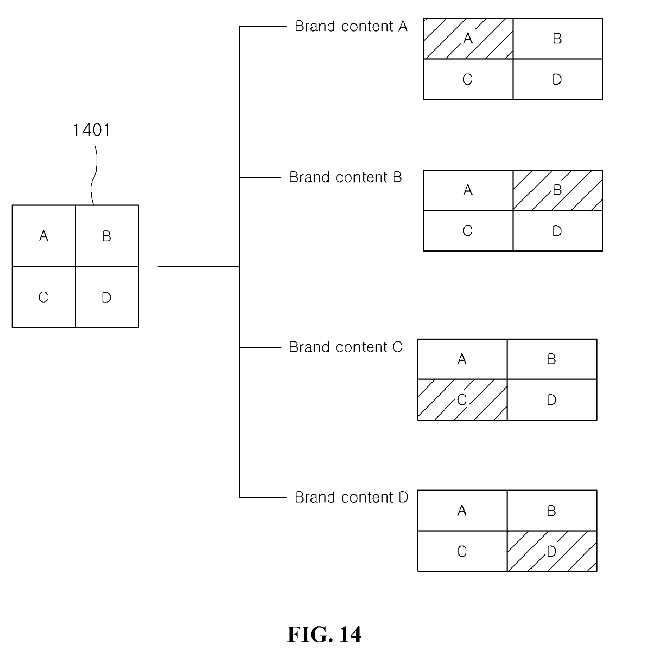

FIG. 14 illustrates a method of registering content associated with multiple brands as corresponding brand content in accordance with an embodiment of the present invention.

As shown in FIG. 14, the content 1401 refers to content associated with a plurality of brands. The content 1401 is associated with brands "A, B, C, and D". In an embodiment, the controller 319 registers the content 1401 as brand content A, brand content B, brand content C, and brand content D, respectively, and stores them in the database 310. In an embodiment, the registered brand content can be automatically transmitted to the appropriate brand stores when it is registered. For example, when the content 1401 is registered in the content providing system 300, the content 1401 can be associated with appropriate brand stores and automatically stored. In this case, the controller 319 can extract only an area related to a relevant brand from the content 1401, and output the area to the appropriate brand store. For example, when the content 1401 is stored as "brand content A", the controller 319 can extract an area related to brand A from the content 1401 and output the area to the appropriate brand store. With the above described method, the content providing system 300 can easily register content.

The systems and methods for providing content are not limited to the configurations and methods of the above-described embodiments. All or some of the embodiments can be selectively combined to form variants of the embodiments.

With the methods and systems for providing content according to embodiments of the present invention, a variety of brand content can be provided to the user through the electronic book including a page on which the user can view a brand store related to a brand selected by the user, and a page on which the user can view the selected brand content classified according to the creators of the content.

With the methods and systems for providing content according to embodiments of the present invention, brand content collected from a plurality of creators are divided into objects, and the divided objects are combined to provide a brand store and brand content, thereby reducing loading time and load of the database in providing the brand store and the brand content.

The above-described methods, systems, and databases can be implemented as computer-readable code in one or more computer-readable media. As is known in the art, data and instructions can be stored in a single computer-readable medium or distributed amongst multiple computer-readable media.

The systems and methods for providing content are not limited to the configurations and methods of the embodiments described above, and all or some of the embodiments can be selectively combined to yield variants. Many different arrangements of the various components depicted, as well as components not shown, are possible without departing from the spirit and scope of the present invention. Embodiments of the present invention have been described with the intent to be illustrative rather than restrictive. A skilled artisan can develop alternative means of implementing the aforementioned improvements without departing from the scope of the present invention. It will be understood that certain features and subcombinations are of utility and can be employed without reference to other features and subcombinations and are contemplated within the scope of the claims. Not all steps listed in the various figures need be carried out in the specific order described.

While the invention has been shown and described with reference to certain exemplary embodiments thereof, it will be understood by those skilled in the art that various changes in form and details can be made therein without departing from the spirit and scope of the invention as defined by the appended claims.

## Claims

1. A method for providing content using a content providing system, the method comprising:
dividing brand content collected from a plurality of content creators into objects, wherein the plurality of content creators comprises an operator of the content providing system and an advertiser being a seller of goods;
associating the divided objects with corresponding codes;
storing the divided objects in a database, wherein the divided objects are associated with their respective creators;
receiving a brand selection from a user;
outputting an electronic book comprising a page for displaying a brand store where goods related to the selected brand are displayed;
receiving an output selection from the user;
combining the divided objects; and
outputting, according to the output selection, the brand store, operator content being content created by the operator, or advertiser content being content created by the advertiser.

2. The method of claim 1, further comprising:
receiving a search keyword input from the user; and
outputting a search result screen including a brand matching the input search keyword.

3. The method of claim 1 or 2, further comprising:
providing a template enabling the user to edit the operator content or the advertiser content to create user content;
updating the content edited through the template in a user content viewing page of the electronic book; and
when the user content viewing page in the electronic book is selected by the user, outputting the user content.

4. The method of claim 3, further comprising transmitting link information enabling the user to view specific content among the operator content, the advertiser content, and the user content in an external user space in a format supported by the external user space.

5. The method of claim 3 or 4, further comprising: when specific goods are selected by the user, outputting detailed information including link information for a space where the user can purchase the selected specific goods.

6. The method of one of claims 3 to 5, wherein the content providing system is accessible via a plurality of media devices.

7. The method of one of claims 1 to 6, further comprising:
creating second brand content corresponding to a second media device using first brand content created corresponding to a first media device; and
storing the first and second brand content to match corresponding media devices,
wherein the second brand content is created using at least one of:
a format conversion for converting a format of the first media device into a format of the second media device; and
editing and conversion for re-encoding components of the first brand content.

8. The method of claim 7, wherein creating the second brand content corresponding to the second media further comprises:
invoking specific codes corresponding to the second media device among codes associated with the divided objects; and
creating the second brand content by combining the objects associated with the invoked specific codes.

9. The method of one of claims 1 to 8, wherein the electronic book comprises a page on which the user can view content related to selected brand classified according to the creator of the content.

10. The method of one of claims 1 to 9, wherein the dividing brand content or the combing the divided objects is preformed via the content providing system.

11. The method of one of claims 7 to 10, wherein the second brand content is created using the content providing system.

12. One or more computer-readable media having computer-useable instructions embodied thereon for performing a method of providing content, comprising:
dividing brand content collected from a plurality of content creators into objects, wherein the plurality of content creators comprises an operator of the content providing system and an advertiser being a seller of goods;
associating the divided objects with corresponding codes;
storing the divided objects in a database, wherein the divided objects are associated with their respective creators;
receiving a brand selection from a user;
outputting an electronic book comprising a page for displaying a brand store where goods related to the selected brand are displayed;
receiving an output selection from the user;
combining the divided objects; and
outputting, according to the output selection, the brand store, operator content being content created by the operator, or advertiser content being content created by the advertiser.

13. A system for providing content, the system comprising:
a receiver, wherein the receiver receives an access signal from a specific media device;
a creation module, wherein the creation module divides brand content collected from a plurality of content creators into objects and associates the divided objects with corresponding codes, wherein the plurality of content creators comprises an operator of the system and an advertiser being a seller of goods;
a database, wherein the database stores the divided objects, wherein the divided objects are associated in the database with a creator of the respective brand content;
an input module, wherein the input module receives a brand selection from the user;
an output module, wherein the output module is configured to output:
a first screen for displaying an electronic book;
a second screen for displaying a brand store where goods related to the selected brand are displayed by combining the divided objects when a store viewing page in the electronic book is selected by the user;
a third screen for displaying operator content, being content created by the operator of the system, related to the selected brand when an operator content viewing page in the electronic book is selected by the user; and
a fourth screen for outputting advertiser content, being content created by the advertiser, related to the selected brand when an advertiser content viewing page in the electronic book is selected by the user; and
a controller, wherein the controller permits access to the system via the specific media device, associates the divided objects with corresponding codes, controls combination of the divided objects, and controls the receiver, the database, and the output module.

14. The system of claim 13, wherein the input module receives a search keyword input from the user, and the output module outputs a search result including a brand matching the input search keyword.

15. The system of claim 13 or 14, further comprising an update module,
wherein the creation module provides a template enabling the user to edit the operator content or the advertiser content in terms of objects to create user content,
the update module updates content edited through the template in a user content viewing page of the electronic book, and
the output module outputs the user content when the user content viewing page in the electronic book is selected by the user.

16. The system of one of claim 13 to 15, further comprising a transmitter, wherein the transmitter transmits link information enabling the user to view specific content among the operator content, the advertiser content, and the user content in an external user space in a format supported by the external user space.

17. The system of one of claim 13 to 16, wherein when specific goods are selected from the goods in the brand store by the user, the output module outputs detailed information including link information for a space where the user can purchase the selected specific goods.

18. The system of one of claim 13 to 17, wherein the system is accessible via a plurality of media devices.

19. The system of one of claim 13 to 18, wherein the creation module creates second brand content corresponding to a second media device using first brand content created corresponding to a first media device,
the database stores the first brand content and the second brand content to match corresponding media devices, and
the second brand content is created using at least one of:
a format conversion for converting a format of the first media device into a formate of the second media device; and
editing and conversion for re-encoding components of the first brand content.

20. The system of one of claim 13 to 19, wherein the controller invokes specific codes corresponding to the second media device among codes associated with the divided objects, and
the creation module creates the second brand content by combining objects associated with the invoked specific codes.
